# EUROPÄISCHE PATENTSCHRIFT

(11) **EP 0 494 206 B1**
(45) Veröffentlichungstag und Bekanntmachung des Hinweises auf die Patenterteilung: **27.04.1994**
(21) Anmeldenummer: 90914390.1
(22) Anmeldetag: 13.09.1990
(51) Int. Cl.: B60T 8/32

(54) **ANTRIEBSSCHLUPFREGELSYSTEM**
DRIVE SLIP CONTROL SYSTEM
SYSTEME DE REGULATION DU GLISSEMENT A L'ENTRAINEMENT

(30) Priorität: 29.09.1989 DE 3932567
(43) Veröffentlichungstag der Anmeldung: 15.07.1992
(73) Patentinhaber: ROBERT BOSCH GMBH, 70442 Stuttgart (DE)
(72) Erfinder: SCHÄFER, Jochen, D-7140 Ludwigsburg (DE); POLZIN, Norbert, D-7000 Stuttgart 1 (DE); SAUTER, Thomas, D-7148 Remseck (DE); DZIERZAWA, Günter, D-7050 Waiblingen-Hegnach (DE); JUNG, Jürgen, D-6660 Zweibrücken (DE); KÜHNER, Bernd, D-7518 Bretten (DE)
(86) Internationale Anmeldenummer: EP9001558
(87) Internationale Veröffentlichungsnummer: WO9104895

(56) Entgegenhaltungen:
- EP-A- 0 263 595
- WO-A-89/06615
- DE-A- 3 914 211
- US-A- 4 032 197

## Beschreibung

### Stand der Technik

Aus der DE-PS 32 36 366 ist ein Antriebsschlupfregelsystem bekannt, bei dem die Geschwindigkeit der angetriebenen Räder miteinander verglichen werden und bei Überwiegen der Geschwindigkeit eines Rads dieses gebremst wird. Es ist allgemein bekannt, daß man den Druck gepulst auf- und/oder abbauen kann. Die beschriebene Regelung beeinflußt immer nur ein Rad und gleicht die Radgeschwindigkeiten aneinander an. Sie hat somit eine ähnliche Wirkung wie eine Differentialsperre.

### Vorteile der Erfindung

Die Erfindung verbessert das bekannte System dahingehend, daß eine bessere Anpassung der Druckerhöhung und Druckerniedrigung an die jeweiligen Verhältnisse zustandekommt. Vorzugsweise wird die Gradientenänderung lediglich durch Änderung der Pausenzeit gemäß den genannten Kriterien bewirkt.

Die erfindungsgemäße Regelung geht vorzugsweise nur unterhalb einer vorgegebenen Fahrzeuggeschwindigkeit (z.B. 30 km/h) in Betrieb. Eine laufende Regelung wird jedoch erst bei Erreichen einer höheren Fahrzeuggeschwindigkeit (z.B. 50 km/h) abgebrochen. Um thermische Überlastungen der Bremsen zu vermeiden wird die Regelung nach einer vorgegebenen Zeitspanne außer Betrieb gesetzt.

Vorzugsweise wird die oben beschriebene Regelung als einzige Antriebsschlupfregelung eingesetzt, d.h., es kommt zu keiner gemeinsamen Bremsung der beiden angetriebenen Räder, sondern diese können gemeinsam durchdrehen und es wird auch das Motormoment nicht beeinflußt. Es handelt sich damit um ein Einfach-ASR, das die Wirkung einer Differentialsperre aufweist, also bei µ-Split-Bedingungen wie ein komfortables ASR wirkt, allerdings bei kleinem µ und homogener Fahrbahn beide Räder durchdrehen läßt.

### Figurenbeschreibung

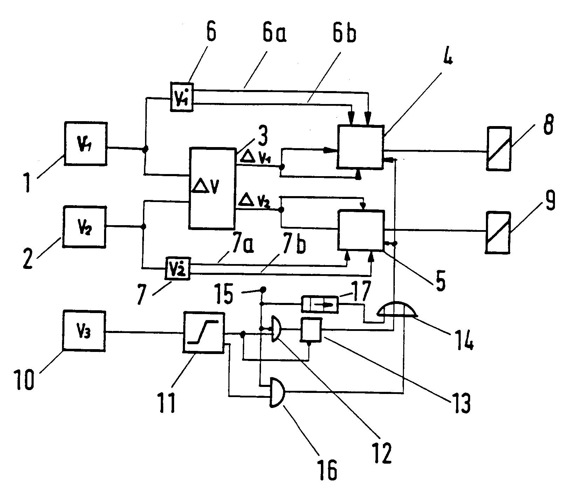

Anhand der Zeichnung wird ein Ausführungsbeispiel der Erfindung beschrieben. Dort sind mit 1 und 2 den angetriebenen Rädern zugeordnete Geschwindigkeitssensoren bezeichnet, die mit einem Vergleicher 3 verbunden sind. Sind die Radgeschwindigkeiten V₁ und V₂ um mehr als einen kleinen Schwellwert verschieden (Kurvenfahrt), so wird ein Signal ΔV₁ oder ΔV₂ auf einer der Ausgangsleitungen abgegeben. Welche Leitung Signal führt, hängt davon ab, welches Rad schneller dreht. Das Signal ΔV₁ bzw. ΔV₂ setzt einmal einen Impulsgenerator 4 bzw. 5 in Betrieb, der Impulse gleicher Breite abgibt; der Impulsabstand ist variabel und wird durch das im Vergleicher gewonnene Signal ΔV₁ bzw. ΔV₂ einerseits und durch das von einem Differenzierer 6 bzw. 7 auf Leitung 6a bzw. 7a gelieferte Radbeschleunigungssignal +V̇₁ bzw. +V̇₂ beeinflußt. Mit größer werdendem +ΔV und/oder V̇ wird die Pause kleiner und damit der Gradient des Druckaufbaus größer.

Die Druckaufbausignale werden einem Dreistellungsventil 8 bzw. 9 zugeführt, das den Druck an der zugehörigen Radbremse mit sich ändernden Pausen und damit änderndem Gradienten hochpulst.

Ist das Maximum von ΔV überschritten, d.h., das zu schnelle Rad beginnt zu verzögern, so schaltet das entstehende Verzögerungssignal -V̇₁ bzw. -V̇₂ auf Leitung 6b bzw. 7b auf ein (anderes) Abbautastverhältnis um; auch jetzt beeinflussen ΔV und -V̇ das Tastverhältnis durch Änderung der Pause. Diese werden kleiner und damit der Druckabbaugradient größer, wenn |-V̇| zunimmt und wenn ΔV zunimmt. Durch die nun erzeugten Impulse wird das Ventil 8 oder 9 so zwischen zwei Stellungen gepulst, daß Druck gepulst abgebaut wird.

Ein Sensor 10 z.B. an einem nicht angetriebenen Rad liefert ein der Fahrzeuggeschwindigkeit entsprechendes Signal. Übersteigt dies eine Schwelle von z.B. 30 km/h im Block 11 so erzeugt dieser Block ein Ausgangssignal, das über ein Und-Gatter 12 ein bistabiles Glied 13 setzt. Dessen Ausgangssignal setzt die Impulsgeneratoren 4 bzw. 5 über ein Oder-Gatter 14 still.

Dies bedeutet, daß kein Druck aufgebaut wird, wenn die vorgegebene Geschwindigkeitsschwelle überschritten wird, ohne daß ein Signal an einer Klemme 15 anzeigt, daß die Regelung schon angelaufen ist. Ist dagegen die Regelung angelaufen bevor die 30 km/h-Schwelle erreicht war, so wird das bistabile Glied 13 nicht gesetzt, also auch nach Erreichen der 30 km/h-Schwelle Druck aufgebaut. Die Regelung wird hier stillgesetzt, wenn eine zweite Schwelle von z.B. 50 km/h bei laufender Regelung erreicht wird und der Block 11 auf einer zweiten Ausgangsleitung Signal führt und über ein Und-Gatter 16 die Impulsgeber sperrt. Das bistabile Glied 13 wird z.B. bei Abfall des 30 km/h-Signals rückgesetzt.

Dauert die Regelung über eine durch ein Zeitglied 17 bestimmte Zeit an, so schaltet dessen Ausgangssignal ebenfalls die Impulsgeber ab.

## Patentansprüche

1. Betriebsverfahren für ein Antriebsschlupfregelsystem, bei dem die Radgeschwindigkeiten (V1, V2) der angetriebenen Räder eines Fahrzeugs miteinander verglichen werden (in 3) und aus dem Vergleich bei Überwiegen der Geschwindigkeit eines Rads Signale zum Aufbau des Bremsdrucks an diesemschneller drehenden Rad und danach zum Druckabbau gewonnen werden, wobei sowohl der Druckaufbau als auch der Druckabbau gepulst erfolgt (Impulsgeber 4,5), dadurch gekennzeichnet, daß der Gradient des Druckaufbaus von der Abweichung ΔV (aus 3) der Radgeschwindigkeiten voneinander und von der Radbeschleunigung V̇ des schneller drehenden Rads (aus 6 und 7) und der Gradient des Druckabbaus von ΔV (aus 3) und der Radverzögerung -V̇ des schneller drehenden Rads (aus 6,7) abhängt, wobei der Gradient des Druckaufbaus umso größer ist, je größer ΔV und V̇ ist und der Gradient des Druckabbaus umso kleiner ist, je größer ΔV und umso großer ist, je größer | -V̇ | ist.

2. Betriebsverfahren nach Anspruch 1, dadurch gekennzeichnet, daß die Druckaufbauimpulse und die Druckabbauimpulse jeweils gleich lang sind und daß die dazwischenliegenden Pausen im Sinne der gewünschten Gradientenänderung verändert werden.

3. Betriebsverfahren nach Anspruch 1 oder 2, dadurch gekennzeichnet, daß die Regelung nur unterhalb einer vorgegebenen Fahrzeuggeschwindigkeit in Betrieb gesetzt wird, jedoch die laufende Regelung erst oberhalb einer zweiten größeren vorgegebenen Fahrzeuggeschwindigkeit außer Betrieb gesetzt wird (Anordnung 10 bis 14).

4. Betriebsverfahren nach einem der Ansprüche 1 bis 3, dadurch gekennzeichnet, daß die Regelung nach einer vorgegebenen Zeitspanne außer Betrieb gesetzt wird (Zeitglied 7).

5. Betriebsverfahren nach einem der Ansprüche 1 bis 4, gekennzeichnet durch seine alleinige Anwendung zur Antriebsschlupfregelung.

## Claims

1. Operating method for a drive slip control system in which the wheel speeds (V1, V2) of the driven wheels of a vehicle are compared with one another (in 3) and, if the speed of one wheel is greater, signals for the build-up of the brake pressure at this more rapidly rotating wheel and subsequently for the reduction of the pressure are obtained from the comparison, both the build-up of pressure and the reduction of pressure taking place in pulses (pulse generators 4, 5), characterised in that the gradient of the pressure build-up depends on the deviation ΔV (from 3) of the wheel speeds relative to one another and on the wheel acceleration V̇ of the more rapidly rotating wheel (from 6 and 7) and the gradient of the pressure reduction depends on ΔV (from 3) and the wheel deceleration -V̇ of the more rapidly rotating wheel (from 6, 7), the gradient of the pressure build-up being larger when ΔV and V̇ are larger and the gradient of the pressure reduction being smaller when ΔV is larger and being larger when |-V̇| is larger.

2. Operating method according to Claim 1, characterised in that the pressure build-up pulses and the pressure reduction pulses are respectively of equal length and that the intermediate pauses are changed in accordance with the desired change in gradient.

3. Operating method according to Claim 1 or 2, characterised in that the control system is only put into operation below a specified vehicle speed but the operating control system is only put out of operation above a second and greater specified vehicle speed (arrangement 10 to 14).

4. Operating method according to one of Claims 1 to 3, characterised in that the control system is stopped after a specified period of time (time element 17).

5. Operating method according to one of Claims 1 to 4, characterised by its exclusive use for drive slip control.

## Revendications

1. Procédé de mise en oeuvre d'un système de régulation anti-patinage à l'entraînement selon lequel on compare la vitesse (V1, V2) des roues motrices d'un véhicule (dans 3) et à partir de la comparaison, pour la vitesse d'une roue qui domine on émet des signaux pour diminuer la pression de frein sur cette roue rapide puis on diminue la pression, l'augmentation de pression et la diminution de pression se faisant de manière impulsionnelle (capteur d'impulsions 4, 5), procédé caractérisé en ce que le gradient de la montée de pression dépend de la déviation ΔV (selon 3) des vitesses de roues et de l'accélération de roues (V̇) de la roue tournant le plus rapidement (selon 6 et 7) et du gradient de la diminution de pression de ΔV (selon 3) et de la décélération de roues (-V̇) de la roue la plus rapide (6, 7) le gradient de la montée en pression étant d'autant plus grand que ΔV ou V̇ est grand et le gradient de la diminution de pression est d'autant plus petit que ΔV est grand et ainsi que plus grand que |-V̇|.

2. Procédé de mise en oeuvre selon la revendication 1, caractérisé en ce que les impulsions de montée en pression et les impulsions de diminution de pression ont chaque fois la même longueur et en ce que les intervalles sont modifiés dans le sens d'un changement de gradient.

3. Procédé de mise en oeuvre selon la revendication 1 ou 2, caractérisé en ce que la régulation ne se met en oeuvre qu'en-dessous d'une vitesse de déplacement déterminée, mais toutefois la régulation courante est mise hors-service au-dessus d'une seconde vitesse de véhicule, prédéterminée, plus grande (dispositif 10-14).

4. Procédé de mise en oeuvre selon l'une des revendications 1 à 3, caractérisé en ce que la régulation est mise hors-service après un intervalle de temps donné (élément de temporisation 7).

5. Procédé de mise en oeuvre selon l'une des revendications 1 à 4, caractérisé par son unique application à la régulation du patinage à l'entraînement.
